# EUROPÄISCHE PATENTSCHRIFT

(11) **EP 4 059 032 B1**
(45) Veröffentlichungstag und Bekanntmachung des Hinweises auf die Patenterteilung: **04.02.2026**
(21) Anmeldenummer: 19829013.2
(22) Anmeldetag: 11.12.2019
(51) Int. Cl.: H01B 17/28, H01G 4/32, H01G 4/22

(54) **HOCHSPANNUNGSDURCHFÜHRUNG UND VERFAHREN ZU DEREN HERSTELLUNG**
HIGH-VOLTAGE FEEDTHROUGH AND METHOD FOR PRODUCING SAME
TRAVERSÉE HAUTE TENSION ET SON PROCÉDÉ DE PRODUCTION

(43) Veröffentlichungstag der Anmeldung: 21.09.2022
(73) Patentinhaber: HSP Hochspannungsgeräte GmbH, 53842 Troisdorf (DE)
(72) Erfinder: LANGENS, Achim, 53797 Lohmar (DE)
(74) Vertreter: Betten & Resch
(86) Internationale Anmeldenummer: PCT/EP2019/084639
(87) Internationale Veröffentlichungsnummer: WO 2021/115584

(56) Entgegenhaltungen:
- WO-A1-2019/011426
- WO-A2-2015/158532
- CH-A- 97 968
- GB-A- 1 542 583
- JP-A- H04 255 617

## Beschreibung

Die Erfindung betrifft eine Hochspannungsdurchführung mit einem Isolierkörper und einem durch den Isolierkörper hindurchgeführten Innenleiter, wobei der Isolierkörper Isolierlagen aus einem synthetischen Material umfasst.

Eine Hochspannungsdurchführung ist auf ein Isolieren von Spannungen oberhalb von 1 kv, bevorzugt oberhalb von 100 kV ausgelegt. Im Allgemeinen hat eine solche Hochspannungsdurchführung die Aufgabe, den im Betrieb auf einem Hochspannungspotential liegenden Innenleiter der Hochspannungsdurchführung von einer auf Erdpotential befindlichen Umgebung, beispielsweise einer Wandung der Hochspannungsanlage oder einer Kesselwand eines Transformators, elektrisch zu isolieren.

Eine artgemäße Hochspannungsdurchführung ist aus der WO 2019/011426 A1 bekannt. Die Isolierlagen der bekannten Hochspannungsdurchführung weisen ein textiles Flächengebilde auf, das beispielsweise ein Vliesstoff ist. Der Vliesstoff ist aus Fasern oder Filamenten einer beliebigen, insbesondere endlichen Länge oder aus sogenannten Endlosfilamenten zusammengesetzt. Der Vliesstoff kann beispielsweise ein synthetischer Kunststoff-Vliesstoff sein. Ein Kunststoff-Vliesstoff zeichnet sich dabei durch Kunststofffasern aus, die das Vliesmaterial ausbilden.

Üblicherweise werden die Isolierlagen aus dem synthetischen Material auf einen Wickelkern, beispielsweise den Innenleiter, aufgewickelt und anschließend mit einem Harz imprägniert. Auf diese Weise entsteht ein Wickelkörper, der durch das Harz für den Betrieb bei Hochspannung ausreichend gute mechanische und isolierende Eigenschaften aufweist. Ein lückenfreies Imprägnieren ist für einen zuverlässigen Betrieb der Hochspannungsdurchführung hoch relevant.

Aus der JP H04 255617 A ist eine Isolatoranordnung bekannt, bei der ein aufgewickeltes Isolatormaterial verwendet wird, das eine Faltstruktur aufweist.

Die WO 2015/158532 A2 offenbart ein Verfahren zum Herstellen eines perforierten blattförmigen Separators für elektrische Isolatoren.

Aus der CH 97 968 A ist ein Verfahren zum Herstellen eines Kondensatorkörpers bekannt, bei dem Papier- und Metallfolien und gefaltete oder gewellte Lagen aus Papier oder Metall abwechselnd auf einen Wickelkern gewickelt werden.

GB 1 542 583 A beschreibt einen Kondensator mit einem Isolierkörper mit Folien aus einem synthetischen Material.

Die Aufgabe der Erfindung ist es, eine artgemäße Hochspannungsdurchführung vorzuschlagen, die möglichst zuverlässig ist.

Die Aufgabe wird bei einer artgemäßen Hochspannungsdurchführung erfindungsgemäß dadurch gelöst, dass die Isolierlagen zur Ausbildung von Hohlräumen zwischen benachbarten Isolierlagen jeweils eine Faltstruktur aufweisen. Die Isolierlagen weisen jeweils eine Faltstruktur mit einer ausgeprägten Faltrichtung auf, wobei aufeinander direkt aufliegende Isolierlagen gegenübereinander unterschiedliche Faltrichtungen aufweisen. Demgemäß liegen die Isolierlagen nicht als im Wesentlichen ebenflächiges Flächengebilde vor, sondern weisen eine (unregelmäßige) Faltstruktur auf, die sinngemäß auch als Kreppstruktur bezeichnet werden kann. Die Faltstruktur ist dabei nicht völlig beliebig, sondern weist eine geprägte Faltrichtung auf. Diese Faltrichtung ist dadurch ausgeprägt bzw. ausgezeichnet, dass entlang dieser ausgeprägten Faltrichtung die Faltstruktur längliche Einbuchtungen aufweist, die dazu geeignet sind, Durchgangskanäle entlang der Oberfläche der Isolierlage zumindest teilweise zu begrenzen.

Jede Isolierlage weist dabei geeigneter Weise nur eine ausgeprägte Richtung auf. Das bedeutet beispielsweise, dass die auf diese Weise ausgebildeten Einbuchtungen oder Kanäle (die auch als Falten bezeichnet werden können) in etwa parallel zueinander verlaufen. Die Parallelität der Kanäle kann in diesem Zusammenhang dabei selbstredend nicht exakt verstanden werden, weil material- und herstellungsbedingt an sich Unregelmäßigkeiten aufweist. Dennoch ist im Rahmen der Erfindung eine Richtung als ausgeprägt bzw. ausgezeichnet anzunehmen, wenn für den Fachmann eine Richtung entlang der Oberfläche der Isolierlage in der Faltstruktur erkennbar in dem zuvor beschriebenen Sinne ausgeprägt bzw. ausgezeichnet ist.

Die Isolierlagen sind geeigneter Weise im Isolierkörper (in Radialrichtung) übereinandergelegt bzw. angeordnet. Die radial benachbarten Isolierlagen sind dabei derart angeordnet, dass sie unterschiedliche Faltrichtungen aufweisen. Damit kann erreicht werden, dass die in der Faltstruktur ausgebildeten wiederholten Einbuchtungen bzw. Kanäle sich nicht ineinanderlegen, sondern die Kanäle der aufeinander gelegten Isolierlagen in Zusammenwirkung Kanäle und zwischen den Isolierlagen eingeschlossene Hohlräume ausbilden.

Ein Vorteil der Erfindung ist der Umstand, dass die ausgebildeten Kanäle und Hohlräume einen besseren Durchfluss eines Harzes bei der Imprägnierung erlauben. Dies wiederum erlaubt eine verbesserte Imprägnierung im Sinne einer Vermeidung von Lufteinschlüssen, da das Harz während der Imprägnierung sich innerhalb des Isolierkörpers besser verteilen kann. Auf diese Weise kann die Zuverlässigkeit der Hochspannungsdurchführung verbessert werden. Zudem ist durch die erfindungsgemäße Hochspannungsdurchführung die Verwendung anderer Imprägnierstoffe ermöglicht. Insbesondere solcher, die aufgrund ihrer Bestandteile bzw. derer physikalischer Eigenschaften bei ebenflächenartigen Isolierlagen den Isolierkörper nicht ausreichend durchsetzen können. Beispiele für solche Materialien sind gefüllte Harzsysteme.

Bevorzugt ist das synthetische Material ein synthetischer Kunststoff, besonders bevorzugt ein synthetisches Vlies. Diese Stoffe haben sich insbesondere bezüglich ihrer Isolationseigenschaften als besonders vorteilhaft erwiesen. Vorzugsweise weist der Vliesstoff ein synthetisches Polymer auf. Das synthetische Polymer kann beispielsweise ein Polyester, besonders bevorzugt Polyethylenterephthalat (PET), sein. Synthetische Polymere sind apolar und somit feuchtigkeitsabweisend.

Die Isolierlagen sind zweckmäßigerweise konzentrisch oder spiralförmig um den Innenleiter unter Ausbildung eines Wickelkörpers gewickelt. Es ist hierbei anzumerken, dass die Isolierlagen nicht direkt auf den Innenleiter aufgewickelt sein müssen. Es kann vielmehr auch ein rohrförmiger Wickelträger vorgesehen sein, in dessen Inneren der Innenleiter angeordnet ist. Mit dem Wickelkörper ist ein besonders kostengünstig hergestellter und zuverlässiger Isolierkörper bereitgestellt.

Die Faltrichtungen der Isolierlagen sind geeigneter Weise diagonal zu einer Wickelrichtung des Wickelkörpers. Demnach beträgt ein Winkel zwischen den Faltrichtungen zweier aufeinander liegenden Isolierlagen geeigneter Weise zwischen 30 Grad und 60 Grad. In einer solchen Konstellation sind die Hohlräume und Kanäle zwischen den Isolierlagen in vorteilhafter Weise besonders gut ausgeprägt.

Gemäß einer Ausführungsform der Erfindung umfasst der Isolierkörper leitende Steuereinlagen zur Feldsteuerung, insbesondere kapazitiver Feldsteuerung. Die Steuereinlagen dienen dabei zur kapazitiven Feldsteuerung des elektrischen Feldes der Hochspannungsdurchführung in deren Betrieb. Damit ergibt sich also eine weitere Verbesserung der elektrischen Eigenschaften der Hochspannungsdurchführung. Die Steuereinlagen sind um den Innenleiter konzentrisch zueinander angeordnet. Sie können beispielsweise als Folien aus Aluminium hergestellt sein.

Wie bereits zuvor ausgeführt, treten die Vorteile der Erfindung dann besonders deutlich hervor, wenn Isolierkörper mit einem Harz imprägniert ist. Entsprechend geeignete Harze sind aus dem Stand der Technik hinlänglich bekannt.

Es wird als besonders vorteilhaft angesehen, wenn das Harz einen Füllstoff umfasst. Der Füllstoff kann insbesondere aus Feststoff-Partikeln bzw. Teilchen bestehen. Der Einsatz des Füllstoffes beeinflusst vorteilhaft die physikalischen Eigenschaften des Isoliersystems der Hochspannungsdurchführung und schafft zudem eine deutliche Kostenverbesserung im Vergleich zu füllstofffreien Systemen.

Gemäß einer Ausführungsform der Erfindung ist die Hochspannungsdurchführung auf Isolierung einer Betriebsspannung von mehr als 100 kV ausgelegt. Dazu weist die Hochspannungsdurchführung insbesondere eine Länge von mehr als 5 m auf. Bei derart groß und massiv ausgebildeten Hochspannungsdurchführungen ist der Einsatz von Füllstoffen besonders vorteilhaft, weil er eine hohe mechanische, thermische und elektrische Stabilität unterstützt bzw. gewährleistet.

Die Erfindung betrifft ferner ein Verfahren zur Herstellung einer Hochspannungsdurchführung.

Die Aufgabe der Erfindung ist es, ein solches Verfahren anzugeben, dass möglichst kostengünstig ist und die Herstellung einer möglichst zuverlässigen Hochspannungsdurchführung ermöglicht.

Die Aufgabe wird bei dem artgemäßen Verfahren erfindungsgemäß dadurch gelöst, dass Isolierlagen aus einem synthetischen Kunststoff jeweils mit einer ausgeprägten Faltrichtung versehen werden, die Isolierlagen unter Ausbildung eines Wickelkörpers um einen Innenleiter herumgewickelt werden, wobei die Faltrichtungen radial benachbarter bzw. direkt aufeinander aufliegender Isolierlagen vorzugsweise unterschiedliche Faltrichtungen aufweisen, und der Wickelkörper mit einem einen Füllstoff aufweisenden Harz imprägniert wird.

Geeigneterweise wird für die Isolierlagen jeweils ein synthetischer Trägerwerkstoff verwendet, der ein Thermoplast sein kann. Ab einer definierten Temperatur lässt sich ein solcher Thermoplast warmverformen. Zur Erzeugung der Isolierlagen wird der Werkstoff mittels eines Warmverformungsverfahrens strukturiert (mikro-strukturiert), dass er die Faltstruktur erlangt. Es ist nicht verlangt, dass der Trägerwerkstoff die Faltstruktur dauerhaft beibehält. Es ist ausreichend, wenn die Faltstruktur bis zum Imprägnieren bzw. bis zum Abschluss des Imprägnierens fortbesteht. Danach wird die Form des Isolierkörpers durch das ausgehärtete Harz entsprechend erhärtet.

Die weiteren Merkmale des erfindungsgemäßen Verfahrens können den Merkmalen entsprechen, die im Zusammenhang mit der erfindungsgemäßen Hochspannungsdurchführung zuvor erörtert worden sind. Die wesentlichen Vorteile des Verfahrens ergeben sich insbesondere aus den zuvor beschriebenen Vorteilen der erfindungsgemäßen Hochspannungsdurchführung.

Die Erfindung wird anschließend anhand der in den Figuren 1 bis 3 gezeigten Ausführungsbeispiele weiter erläutert.
Figur 1 zeigt ein Ausführungsbeispiel einer erfindungsgemäßen Hochspannungsdurchführung in einer schematischen Darstellung;
Figur 2 zeigt ein Beispiel für Isolierlagen in einer schematischen Darstellung;
Figur 3 zeigt ein Beispiel eines Ablaufdiagramms eines Ausführungsbeispiels des erfindungsgemäßen Verfahrens.

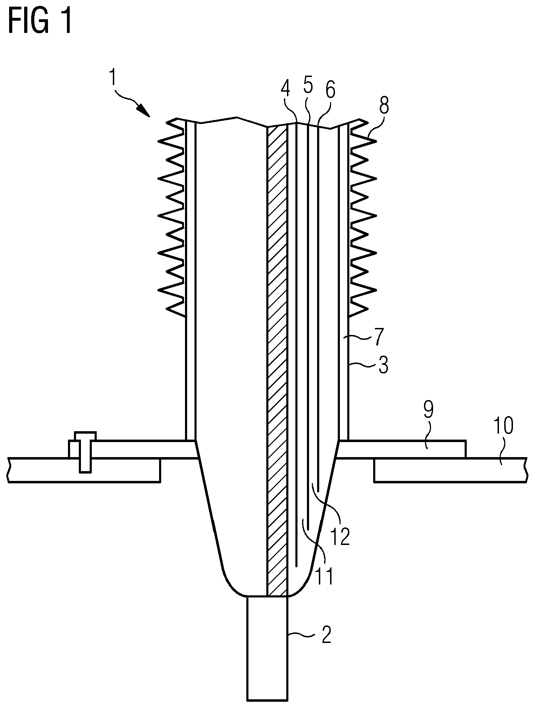

In Figur 1 ist eine Hochspannungsdurchführung 1 dargestellt. Die Hochspannungsdurchführung 1 umfasst einen Innenleiter 2, der durch einen Isolierkörper 3 hindurchgeführt ist. Der Innenleiter 2 ist als Hohlleiter aus Aluminium oder Kupfer ausgebildet. Die Hochspannungsdurchführung 1 umfasst ein Gehäuse 7 sowie Schirme 8 aus Silikon, die außen auf dem Gehäuse 7 befestigt sind. Ferner ist ein Befestigungsflansch 9 vorgesehen, der zum Befestigen der Hochspannungsdurchführung 1 an einer Wandung 10 dient, beispielsweise einem Transformatorkessel.

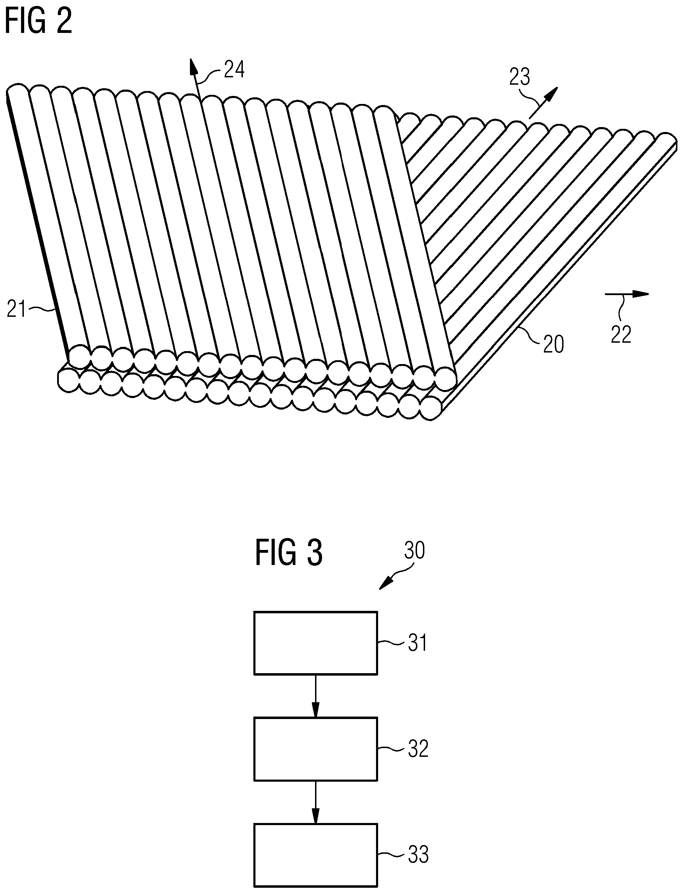

Der Isolierkörper 3 umfasst leitende Steuereinlagen 4-6 zur kapazitiven Feldsteuerung, die konzentrisch um den Innenleiter 3 angeordnet sind. Die Steuereinlagen 4-6 sind durch gewickelte Isolierschichten 11, 12 voneinander getrennt, die nach dem Aufwickeln auf den Innenleiter 5 in Harz getränkt worden sind. Jede Isolierschicht 11 bzw. 12 besteht aus mehreren Isolierlagen aus einem PET-Vliesstoff. Auf den Aufbau der Isolierlagen wird in der nachfolgenden Figur 2 näher eingegangen. Das Harz ist ein gefülltes Harz, d.h. es umfasst Feststoff-Teilchen, die mit dem Harz im Isolierkörper eingebettet sind.

Die in Figur 1 dargestellte Hochspannungsdurchführung 1 weist eine Gesamtlänge von 12 m auf und dient zur Isolierung einer Betriebsspannung von über 300 kV.

In Figur 2 sind eine erste Isolierlage 20 und eine zweite Isolierlage 21 ausschnittsweise dargestellt. Die Isolierlagen 20, 21 bestehen aus einem synthetischen Vliesstoff. Bei der Herstellung der Hochspannungsdurchführung werden die Isolierlagen um einen Innenleiter herumgewickelt, wobei ein Pfeil 22 in Figur 2 die Wickelrichtung anzeigt.

Jede Isolierlage 20 bzw. 21 weist eine Faltstruktur auf, die sich durch Einbuchtungen in Form von Kanälen auszeichnet. Die Faltstruktur der ersten Isolierlage 20 zeigt eine ausgeprägte Faltrichtung, die durch einen Pfeil 23 angedeutet ist. Eine entsprechende ausgeprägte Faltrichtung der zweiten Isolierlage ist entsprechend durch einen Pfeil 24 angedeutet. Es ist erkennbar, dass die beiden Faltrichtungen jeweils diagonal zur Wickelrichtung sind. Zudem ist erkennbar, dass die Faltrichtungen der beiden Isolierlagen 20, 21 gegenübereinander verdreht sind. Aufgrund dieser Anordnung sind zwischen den beiden Isolierlagen Hohlräume bzw. Kanäle ausgebildet, die ein Durchdringen des Isolierkörpers durch ein Harz, insbesondere ein mit Feststoff-Partikeln gefülltes Harz, ermöglichen bzw. erleichtern.

Figur 3 illustriert ein Herstellungsverfahren für eine Hochspannungsdurchführung anhand eines Ablaufdiagrammes 30. Demgemäß werden in einem ersten Verfahrensschritt 31 Isolierlagen aus einem synthetischen Kunststoff jeweils mit einer Faltstruktur mit einer ausgezeichneten Faltrichtung versehen. Der synthetische Kunststoff ist im hier dargestellten Beispiel ein Thermoplast. Die Falt- bzw. Kreppstruktur wird entsprechend mittels eines Warmformverfahrens erreicht.

In einem zweiten Verfahrensschritt 32 werden die Isolierlagen unter Ausbildung eines Wickelkörpers um einen Innenleiter herumgewickelt. Das Wickeln erfolgt dabei entweder direkt auf dem Innenleiter oder auf einem dafür bereitgestellten Wickelträger, in den der Innenleiter hineingeschoben wird. In definierten radialen Abständen können geeigneter Weise leitende Steuereinlagen konzentrisch um den Innenleiter angeordnet werden.

In einem dritten Verfahrensschritt 33 wird der so gebildete Wickelkörper mit einem einen Füllstoff, insbesondere Feststoff-Partikel, aufweisenden Harz imprägniert. Anschließend erfolgt das Aushärten des Harz', so dass ein kompakter Block entsteht. Dieser Block kann außen mit einem Gehäuse, einer Nebenisolation, Isolierschirmen und/oder einem Befestigungsflansch versehen werden.

## Patentansprüche

1. Hochspannungsdurchführung (1) mit einem Isolierkörper (3) und einem durch den Isolierkörper (3) hindurchgeführten Innenleiter (2), wobei der Isolierkörper (3) Isolierlagen (20, 21) aus einem synthetischen Material umfasst,
die Isolierlagen (20, 21) jeweils eine Faltstruktur mit einer ausgeprägten Faltrichtung (23, 24) aufweisen,
**dadurch gekennzeichnet, dass** direkt aufeinander aufliegende Isolierlagen (20, 21) gegenübereinander unterschiedliche Faltrichtungen (23, 24) aufweisen.

2. Hochspannungsdurchführung (1) nach Anspruch 1,
wobei das synthetische Material ein synthetischer Kunststoff, bevorzugt ein synthetisches Vlies ist.

3. Hochspannungsdurchführung (1) nach einem der vorangehenden Ansprüche, wobei die Isolierlagen (20, 21) konzentrisch oder spiralförmig um den Innenleiter (2) unter Ausbildung eines Wickelkörpers (3) gewickelt sind.

4. Hochspannungsdurchführung (1) nach Anspruch 3,
wobei die Faltrichtungen (23, 24) der Isolierlagen (20, 21) diagonal zu einer Wickelrichtung (22) des Wickelkörpers sind.

5. Hochspannungsdurchführung (1) nach einem der vorangehenden Ansprüche, wobei der Isolierkörper (3) leitende Steuereinlagen (4 - 6) zur Feldsteuerung umfasst.

6. Hochspannungsdurchführung (1) nach einem der vorangehenden Ansprüche, wobei der Isolierkörper (3) mit einem Harz imprägniert ist.

7. Hochspannungsdurchführung (1) nach Anspruch 6,
wobei das Harz einen Füllstoff umfasst.

8. Hochspannungsdurchführung (1) nach Anspruch 7, wobei der Füllstoff durch Feststoff-Partikel gebildet ist.

9. Verfahren zur Herstellung einer Hochspannungsdurchführung (1) nach einem der Ansprüche 1-8, bei dem
- Isolierlagen (20, 21) aus einem synthetischen Kunststoff jeweils mit einer Faltstruktur versehen werden, wobei die Faltstruktur jeweils mit einer ausgeprägten Faltrichtung (23, 24) versehen ist,
- die Isolierlagen (20, 21) unter Ausbildung eines Wickelkörpers um einen Innenleiter (2) herumgewickelt werden, wobei die Faltrichtungen direkt aufeinander aufliegender Isolierlagen unterschiedliche Faltrichtungen aufweisen,
- der Wickelkörper (3) mit einem einen Füllstoff aufweisenden Harz imprägniert wird.

## Claims

1. High-voltage bushing (1) having an insulating body (3) and an inner conductor (2) guided through the insulating body (3), wherein the insulating body (3) comprises insulating layers (20, 21) made of a synthetic material, [and] the insulating layers (20, 21) each have a fold structure with a pronounced fold direction, **characterized in that** directly superimposed insulating layers (20, 21) have mutually different fold directions (23, 24).

2. High-voltage bushing (1) according to claim 1, wherein the synthetic material is a synthetic plastic, preferably a synthetic non-woven.

3. High-voltage bushing (1) according to one of the preceding claims, wherein the insulating layers (20, 21) are wound concentrically or spirally around the inner conductor (2), forming a wound body (3).

4. High-voltage bushing (1) according to claim 3, wherein the fold directions (23, 24) of the insulating layers (20, 21) are diagonal to a winding direction (22) of the wound body.

5. High-voltage bushing (1) according to one of the preceding claims, wherein the insulating body (3) comprises conductive control layers (4-6) for field control.

6. High-voltage bushing (1) according to one of the preceding claims, wherein the insulating body (3) is impregnated with a resin.

7. High-voltage bushing (1) according to claim 6, wherein the resin comprises a filler.

8. High-voltage bushing (1) according to claim 7, wherein the filler is formed by solid particles.

9. Method for producing a high-voltage bushing (1) according to one of the claims 1-8, in which
• insulating layers (20, 21) made of a synthetic plastic are each provided with a fold structure, wherein the fold structure is each provided with a pronounced fold direction (23, 24),
• the insulating layers (20, 21) are wound around an inner conductor (2), forming a wound body, wherein the fold directions of directly superimposed insulating layers have different fold directions,
• [and] the wound body (3) is impregnated with a resin having a filler.

## Revendications

1. Traversée haute tension (1) comprenant un corps isolant (3) et un conducteur interne (2) traversant le corps isolant (3), le corps isolant (3) comprenant des couches isolantes (20, 21) en matière synthétique,
les couches isolantes (20, 21) présentant chacune une structure plissée ayant une direction de plissage prononcée (23, 24), **caractérisée en ce que** les couches isolantes (20, 21), reposant directement les unes sur les autres, présentent des directions de plissage (23, 24) différentes les unes par rapport aux autres.

2. Traversée haute tension (1) selon la revendication 1,
dans laquelle le matériau synthétique est une matière plastique synthétique, de préférence un non-tissé synthétique.

3. Traversée haute tension (1) selon l'une des revendications précédentes, dans laquelle les couches isolantes (20, 21) sont enroulées de manière concentrique ou en spirale autour du conducteur interne (2) en formant un corps enroulé (3).

4. Traversée haute tension (1) selon la revendication 3,
dans laquelle les directions de pliage (23, 24) des couches isolantes (20, 21) sont en diagonale par rapport à une direction d'enroulement (22) du corps enroulé.

5. Traversée haute tension (1) selon l'une des revendications précédentes, dans laquelle le corps isolant (3) comprend des inserts de commande conducteurs (4 - 6) pour la commande du champ.

6. Traversée haute tension (1) selon l'une des revendications précédentes, dans laquelle le corps isolant (3) est imprégné d'une résine.

7. Traversée haute tension (1) selon la revendication 6, dans laquelle la résine comprend une charge.

8. Traversée haute tension (1) selon la revendication 7, dans laquelle la charge est formée par des particules solides.

9. Procédé de fabrication d'une traversée haute tension (1) selon l'une des revendications 1 à 8, dans lequel
- des couches isolantes (20, 21) en matière plastique synthétique sont pourvues chacune d'une structure plissée, la structure plissée étant pourvue d'une direction de plissage prononcée (23, 24),
- les couches isolantes (20, 21) sont enroulées autour d'un conducteur interne (2) pour former un corps enroulé, les directions de plissage des couches isolantes directement superposées présentant des directions de plissage différentes,
- le corps enroulé (3) est imprégné d'une résine contenant une charge.
